# EUROPÄISCHE PATENTSCHRIFT

(11) **EP 4 452 567 B1**
(45) Veröffentlichungstag und Bekanntmachung des Hinweises auf die Patenterteilung: **03.12.2025**
(21) Anmeldenummer: 23701930.2
(22) Anmeldetag: 24.01.2023
(51) Int. Cl.: B25J 9/04, B25J 9/10, B25J 9/12

(54) **KNICKARMROBOTER ZUR HANDHABUNG GROSSER LASTEN**
ARTICULATED ROBOT FOR HANDLING LARGE LOADS
ROBOT ARTICULÉ POUR MANIPULER DE GRANDES CHARGES

(30) Priorität: 25.01.2022 DE 102022200808
(43) Veröffentlichungstag der Anmeldung: 30.10.2024
(73) Patentinhaber: Fraunhofer-Gesellschaft zur Förderung der angewandten Forschung e.V., 80686 München (DE)
(72) Erfinder: WANNER, Martin-Christoph, 18059 Rostock (DE); DRYBA, Steffen, 18059 Rostock (DE); JENTSCH, Alexander, 18059 Rostock (DE); VINÇON, Armin, 18059 Rostock (DE)
(74) Vertreter: Pfenning, Meinig & Partner mbB
(86) Internationale Anmeldenummer: PCT/EP2023/051640
(87) Internationale Veröffentlichungsnummer: WO 2023/144125

(56) Entgegenhaltungen:
- EP-A2- 0 084 249
- WO-A1-2015/067334
- DE-B4- 112006 001 920
- JP-A- S5 615 995
- JP-A- S59 166 479
- JP-A- S6 044 276

## Beschreibung

Die Erfindung bezieht sich auf einen Knickarmroboter zur Handhabung einer Nutzlast, mit einem Roboterarm, der an einer um eine erste Achse drehbaren Basis befestigt ist und der zumindest zwei, in Form einer kinematischen Kette seriell hintereinander angeordnete Armglieder sowie eine an der kinematischen Kette endseitig angebrachte Zentralhand besitzt. Ein erstes von den zwei hintereinander angeordneten Armgliedern ist um eine quer zur ersten Achse verlaufende, insbesondere zur ersten Achse orthogonal orientierte, zweite Achse an der Basis schwenkbar gelagert, wohingegen ein zweites Armglied um eine dritte Achse an dem ersten Armglied schwenkbar angeordnet ist. Knickarmroboter sind vielseitig und weit verbreitet eingesetzte Industrieroboter, deren Kinematik aus mehreren gelenkig miteinander verbundenen Armgliedern aufgebaut ist, um Endeffektoren, wie bspw. Greifer oder Werkzeuge zu positionieren. Roboter, die über eine serielle Kinematik verfügen, besitzen eine besonders hohe Beweglichkeit und Flexibilität, da bei diesen jedes Armglied seriell nur mit einem weiteren Armglied verbunden ist. Jedoch sind derartige Knickarmroboter bezüglich ihrer Traglast am Armende durch die Notwendigkeit des Mitführens von Antrieben und Kraftübertragungssystemen sowie auch bezüglich ihrer Positioniergenauigkeit durch den Aufsummierungseffekt von Toleranzen entlang der kinematischen Kette beschränkt.

Aus der Druckschrift WO 84/02301 ist ein typischer, so genannter sechsachsiger vertikaler Knickarmroboter bekannt, dessen erstes Armglied schwenkbar, einseitig endseitig an eine, um eine erste Achse drehbar gelagerte Basis angefügt ist. Die erste Achse entspricht der Vertikalachse, die Schwenkachse, um die das erste Armglied schwenkbar gelagert ist, wird als zweite Achse bezeichnet und ist orthogonal zur ersten Achse, d. h. horizontal orientiert. Das zweite Armglied ist seinerseits endseitig mit dem der Basis gegenüberliegenden Ende des ersten Armgliedes gleichfalls schwenkbar verbunden, nämlich um eine dritte Schwenkachse, die parallel zur zweiten Achse orientiert ist. Schließlich ist an dem der dritten Achse gegenüberliegenden Ende des zweiten Armgliedes eine, um drei Achsen drehbar gelagerte Zentralhand zur Aufnahme bzw. Manipulation von Werkstücken angebracht.

Der Druckschrift EP 0 243 362 B1 ist eine Konstruktion zu entnehmen, die ebenfalls einen vertikalen Knickarmroboter mit zwei gelenkig miteinander verbundenen Armgliedern aufweist, zu deren Verschwenken um die jeweils horizontal orientierten zweiten und dritten Achsen eine aufwendigere Aktor-Getriebekonstruktion eingesetzt wird, um den Aktionsradius sowie auch die Traglast des Roboters zu vergrößern. Hierzu sind zwei Zylindereinheiten vorgesehen, die über ein schwenkbar gelagertes Joch miteinander verbunden sind und somit in aufeinander abgestimmter Weise sowohl für das Verschwenken des ersten Armgliedes um die zweite Achse sowie auch das Verschwenken des zweiten Armgliedes um die dritte Achse verantwortlich sind.

Insbesondere ist zum Verschwenken des zweiten Armgliedes um die dritte Achse ein zusätzlicher Kraftarm schwenkbar mit dem zweiten Armglied gekoppelt, der parallel zum ersten Armglied unter Ausbildung eines sog. Parallelogrammgetriebes verläuft, in das eine der beiden Zylindereinheiten kinematisch eingebunden ist.

Die Druckschrift US 4,507,043 offenbart ebenfalls einen vertikalen Knickarmroboter, zu dessen Auslenkung des zweiten Armgliedes ein in diesem Fall motorisch angetriebenes Parallelogrammgetriebe vorgesehen ist.

In der Druckschrift DE 10 2011 087 958 A1 ist ein moderner Industrieschweißroboter nach Art eines Knickarmroboters beschrieben, zu dessen Auslenkung innerhalb der jeweiligen Dreh- und Schwenkachsen elektromotorische Antriebe in kompakter Bauform integriert sind, jedoch sind, wie eingangs erwähnt, aufgrund des Eigengewichtes der verbauten Komponenten, insbesondere der elektromotorischen Antriebe, das mit dem Roboter handhabbare Nutzlastgewicht und der mit dem Roboter zugängliche Aktionsradius beschränkt.

Aus der Druckschrift DE10 2013018857 A1 ist ein Knickarmroboter mit einem ersten und einem zweiten Armglied sowie einer am zweiten Armglied angeordneten Zentralhand bekannt, die gemeinsam auf einer drehbaren Basis angeordnet sind, wobei die Armglieder durch zwei Linearaktuatoren in der Form von Spindelantrieben antreibbar sind und wobei jeder der Spindelantriebe mit der Basis und/oder einem oder beiden Armgliedern mittelbar oder unmittelbar verbunden ist.

Aus der Druckschrift WO2018/065137 ist ein Knickarmroboter mit zwei Armgliedern und Lineraktuatoren bekannt, wobei diese mit den Armgliedern nicht mittels Koppelgetrieben, sondern mittels Linearführungen für die Spindelmuttern der Linearaktuatoren verbunden sind.

Auch aus dem Dokument JP S61-44591A ist ein Knickarmroboter mit zwei jeweils mittels Linearaktuatoren antreibbaren Armgliedern bekannt.

Das Dokument DE 11 2006 001 920B4 offenbart ebenfalls einen Roboterarm, bei dem verschiedene Glieder mittels Koppelgetrieben, teilweise in einer Parallelkinematik gekoppelt sind.

Vor dem Hintergrund des Standes der Technik liegt der Erfindung die Aufgabe zugrunde, eine Vorrichtung nach Art eines Knickarmroboters zur Handhabung einer Nutzlast zu schaffen, mit einem Roboterarm, der an einer um eine erste Achse drehbaren Basis befestigt ist und zumindest zwei, in Form einer kinematischen Kette seriell hintereinander angeordnete Armglieder sowie eine an der kinematischen Kette endseitig angebrachte Zentralhand besitzt, wobei durch die Konstruktion einerseits die Handhabung schwerer Lasten ermöglicht und andererseits ein hohes Maß an Präzision und Reproduzierbarkeit der Bewegung der Last erreicht wird.

Die Lösung der der Erfindung zugrunde liegenden Aufgabe gelingt durch eine Vorrichtung mit den Merkmalen des Anspruchs 1. Implementierungen der Erfindung sind Gegenstand der Unteransprüche sowie der weiteren Beschreibung und der Figuren.

Auf der Grundlage des lösungsgemäßen Konstruktionskonzepts für einen Roboter nach Art eines vertikalen Knickarmroboters, bei dem zum Antrieb seiner schwenkbar gelagerten Armglieder jeweils ein mit einem Koppelgetriebe in Wirkverbindung stehender Linearaktuator eingesetzt ist, vermag ein lösungsgemäß ausgebildeter Roboter verglichen mit den derzeit am Markt verfügbaren, leistungsstärksten vertikalen Knickarmroboteranordnungen sehr große Nutzlasten innerhalb eines großen Arbeitsraumes in allen sechs Freiheitsgraden zu positionieren.

Die Erfindung bezieht sich konkret auf eine Vorrichtung in Form eines Knickarmroboters zur Handhabung einer Nutzlast, mit einem Roboterarm, der
- an einer um eine erste Achse drehbaren Basis befestigt ist,
- der zumindest zwei, in Form einer kinematischen Kette hintereinander angeordnete Armglieder aufweist, von denen ein erstes Armglied um eine quer zur ersten Achse verlaufende, insbesondere zur ersten Achse orthogonal orientierte, zweite Achse an der Basis schwenkbar gelagert ist und ein zweites Armglied um eine ebenfalls quer zur ersten Achse verlaufende, insbesondere parallel zur zweiten Achse orientierte, dritte Achse an dem ersten Armglied schwenkbar gelagert ist, und der
   insbesondere eine an der kinematischen Kette endseitig angebrachte Vorrichtung zur Handhabung von Werkzeugen oder Nutzlasten, weiter insbesondere eine Zentralhand, aufweist, wobei ein das erste Armglied um die zweite Achse schwenkender, erster Linearaktuator vorgesehen ist, der über ein erstes Koppelgetriebe einerseits mit der Basis und andererseits mit dem ersten Armglied gekoppelt ist, und wobei ein das zweite Armglied um die dritte Achse schwenkender, zweiter Linearaktuator vorgesehen ist, der über ein zweites, sechsgliedriges Koppelgetriebe ausschließlich mit dem ersten Armglied und dem zweiten Armglied gekoppelt ist, wobei der Fuß des zweiten Linearaktuators an dem ersten Armglied abgestützt ist.

Im Gegensatz zum Stand der Technik stützt sich der zweite Linearaktuator nicht an der Basis des Roboters, sondern an dem ersten Armglied ab, wobei vorteilhaft die Abstützstelle des Linearaktuators von der Stelle beabstandet ist, an der das erste Armglied an der Basis gelagert ist. Bei der individuellen Auslegung des Roboters kann der Abstützpunkt des zweiten Linearaktuators am ersten Armglied mit einer geeigneten Position relativ zu der Achse gewählt werden, in der das zweite Armglied an der Basis gelagert ist, um die gewünschten Übertragungsverhältnisse zu schaffen. Der Abstand der Abstützstelle des zweiten Linearaktuators an dem ersten Armglied von der Stelle, an der das erste Armglied an der Basis gelagert ist, ist vorzugsweise unveränderlich. Weiter ist vorzugsweise die Länge des ersten und/oder des zweiten Armgliedes unveränderlich. Unter der Länge des ersten Armgliedes soll dabei der Abstand der zweiten Achse, in der das erste Armglied an der Basis gelagert ist, von der dritten Achse verstanden werden, in der das zweite Armglied am ersten Armglied schwenkbar gelagert ist.

Weiter können die Längsachsen der Linearaktuatoren jeweils gegenüber dem ersten und/oder dem zweiten Armglied mittels Koppelgetrieben schwenkbar sein. Damit lassen sich mit hoher Flexibilität Übertragungscharakteristiken einstellen. Dazu können die Linearaktuatoren jeweils an ihren Fußpunkten, an denen sie sich proximal zur Basis abstützen, also der erste Linearaktuator an der Bais und der zweite Linearaktuator am ersten Armglied, schwenkbar befestigt sein.

Eine mögliche Ausführungsform der Erfindung kann dabei vorsehen, dass der erste und/oder der zweite Linearaktuator jeweils als Spindelantrieb ausgebildet ist, der jeweils eine motorisch angetriebene Spindel vorsieht, welche in Eingriff mit einer Spindelmutter steht.

Bei dieser Ausführungsform ergibt sich gegenüber einer angetriebenen Spindelmutter der Vorteil, dass der Spindelantrieb ortsfest, beispielsweise am Fuß der Spindel angeordnet werden kann und sich bei einer Bewegung nicht entlang der Spindel bewegt. Dies verringert die zu bewegenden Massen, unter anderem auch bei Schwenkbewegungen der Spindel(n) und trägt dazu bei, Vibrationen zu reduzieren.

Eine weitere Ausführungsform kann zudem vorsehen, dass wenigstens eine der Spindeln um eine zur zweiten Achse parallel orientierte Schwenkachse schwenkbar gelagert ist.

Es kann zudem vorgesehen sein, dass wenigstens eine der Spindeln an ihrem Fußpunkt kardanisch gelagert ist.

Die Schwenkbarkeit der Spindeln ermöglicht zusätzliche Freiheitsgrade der Koppelgetriebe und die kardanische Lagerung erlaubt zudem über die reine Schwenkbewegung der Spindeln hinaus ausgleichende Rollbewegungen. Eine weitere Ausführungsform kann zudem konkret vorsehen, dass die Spindel des ersten Linearaktuators kardanisch schwenkbar an der Basis gelagert ist und /oder dass die Spindel des zweiten Linearaktuators kardanisch schwenkbar am ersten Armglied gelagert ist, wobei jeweils die Motorantriebe der Spindeln mit den kardanischen Lagern in einer Baueinheit verbunden sind. Die Vorrichtung kann dadurch konkretisiert sein, dass das erste Koppelgetriebe über ein Kardangelenk mit der Spindelmuttereinheit des ersten Linearaktuators und das zweite Koppelgetriebe über ein Kardangelenk mit der Spindelmuttereinheit des zweiten Linearaktuators schwenkbar gekoppelt ist.

Mit dieser kardanischen Anbindung der Koppelgetriebe an die Spindelmuttern lassen sich Verkantungsprobleme und damit verbundene Belastungen der Antriebe durch einen suboptimalen Eingriff wirksam verringern oder verhindern.

Eine weitere Ausführungsform kann zudem vorsehen, dass die kardanische Lagerung einer oder beider Spindeln jeweils einen schüsselförmigen Außenkardan, einen innerhalb des Außenkardans drehbar gelagerten Innenkardan sowie innerhalb des Innenkardans ein Lager für eine Spindel aufweist, wobei insbesondere ein Deckel des Kardanlagers eine Motoreinheit des Spindelantriebs trägt.

Diese Ausbildung der kardanischen Lagerung ist platzsparend und einfach bezüglich der Konstruktion. Die Lagerstellen lassen sich gut gegenüber Umgebungseinflüssen schützen. Die Lagerung lässt sich mit Schraubverbindungen zusammenfügen, so dass eine Wartung besonders einfach wird, insbesondere dann, wenn die kardanischen Lagerungen gut zugänglich an der Basis oder im unteren Bereich des ersten Armgliedes angeordnet sind. Auch die Antriebsmotoren und gegebenenfalls ein Antriebsriemen der Spindelantriebe sind damit gut für Wartungen zugänglich.

Es kann außerdem vorgesehen sein, dass das erste Koppelgetriebe und/oder das zweite Koppelgetriebe als sechsgliedrige Watt'sche oder Stephenson'sche Kette ausgebildet ist.

Eine konkrete Ausführungsform der Erfindung kann vorsehen, dass das erste Koppelgetriebe ein ternäres Glied in der Form eines starren Dreiecks sowie ein zweites Koppelmittel aufweist, wobei das ternäre Glied an jeder seiner Ecken jeweils um eine Schwenkachse schwenkbar derart gelagert ist, dass es um eine erste Schwenkachse mit der Spindelmuttereinheit, um eine zweite Schwenkachse mit der Basis, und um eine dritte Schwenkachse mit dem zweiten Koppelmittel schwenkbar verbunden ist. Das zweite Koppelmittel kann beispielsweise eine Koppelstange aufweisen oder in einer Koppelstange bestehen, die an ihrem dem ternären Glied abgewandten Ende schwenkbar mit dem ersten Armglied verbunden ist.

Eine weitere Ausführungsform kann zudem vorsehen, dass das zweite Koppelgetriebe jeweils ein Zug- und Druckkräfte übertragendes erstes Koppelmittel sowie zweites Koppelmittel aufweist, dass das erste Koppelmittel die Form einer starren Dreiecksstruktur besitzt, an deren Ecken das erste Koppelmittel jeweils um eine Schwenkachse schwenkbar derart gelagert ist, dass das Koppelmittel um eine erste Schwenkachse, die beispielsweise eine Schwenkachse eines Kardangelenkes ist, mit der Spindelmuttereinheit, um eine zweite Schwenkachse mit dem ersten Armglied, und um eine dritte Schwenkachse mit dem zweiten Koppelmittel schwenkbar verbunden ist, und dass das zweite Koppelmittel in Form einer Verbindungsstrebe oder Koppelstange ausgebildet ist, dessen eines Strebenende mit dem ersten Koppelmittel um die Schwenkachse schwenkbar verbunden ist und dessen anderes Strebenende mit dem zweiten Armglied um eine Schwenkachse schwenkbar verbunden ist.

Eine weitere Implementierung der Erfindung kann vorsehen, dass das zweite Koppelgetriebe ein erstes und wenigstens ein zweites Zug- und Druckkräfte übertragendes Koppelmittel aufweist, von denen das erste Koppelmittel einerseits an dem ersten Armglied um eine zur zweiten Achse parallel orientierte Schwenkachse schwenkbar gelagert und andererseits mit der Spindelmuttereinheit des zweiten Linearaktuators verbunden ist, und von denen wenigstens das zweite Koppelmittel einerseits mit der Spindelmuttereinheit des zweiten Linearaktuators mittel- oder unmittelbar schwenkbar verbunden und andererseits an dem zweiten Armglied um eine zur zweiten Achse parallel orientierte Schwenkachse schwenkbar gelagert ist, und dass das erste und wenigstens das zweite Koppelmittel mit der Spindelmuttereinheit des zweiten Linearaktuators mittel- oder unmittelbar beispielsweise über ein gemeinsames Kardangelenk verbunden sind.

Es kann außerdem vorgesehen sein, dass zwei Gabelteile eines gabelförmigen Fortsatzes des ersten Armgliedes schwenkbar um eine gemeinsame Schwenkachse mit zwei sich jeweils einseitig schwenkbar um eine Schwenkachse an der Basis abstützenden Hydraulikzylindereinheiten verbunden sind, wobei die Schwenkachsen parallel zur zweiten Achse orientiert sind.

Durch die beiden vorteilhaft symmetrisch zum ersten Armglied und dessen Fortsatz angeordneten Hydraulikzylindereinheiten kann ein Gewichtsausgleich stattfinden, der auf das erste Armglied symmetrisch wirkt, so dass Torsionsmomente, die auf den Roboterarm wirken und die Präzision der Bewegungssteuerung verringern, weitgehend vermieden werden.

Zudem kann auch vorgesehen sein, dass die Zentralhand drei orthogonal zueinander orientierte, motorisch angetriebene Schwenkachsen aufweist, von denen eine Schwenkachse über zwei räumlich getrennte Getriebe durch einen Antriebsmotor antreibbar ist.

Eine weitere Ausführungsform kann zudem vorsehen, dass das erste Armglied eine Armlänge von bis zu 4 m, vorzugsweise 2,5 m, besitzt und das zweite Armglied eine Armlänge von bis zu 4 m, vorzugsweise 3 m besitzt.

Es kann auch vorgesehen sein, dass das erste und zweite Armglied wenigstens abschnittsweise in Form von Doppelstreben ausgebildet sind, so dass längs eines Armgliedes zwei getrennte Kraftpfade zwischen den jeweiligen Anlenkungspunkten der Armglieder vorhanden sind. Bei einer solchen Konstruktion lässt sich auch der gabelförmige Fortsatz am ersten Armglied einfach gestalten.

Zusätzlich zu einer guten Stabilisierung der Konstruktion gegen Torsion kann in den Zwischenräumen zwischen den jeweiligen Doppelstreben auch Raum für andere bewegte Teile der Getriebe geschaffen werden, die in bestimmten Positionen zwischen die Doppelstreben eintauchen.

Eine weitere Ausführungsform kann vorsehen, dass die Koppelmittel des ersten und zweiten Koppelgetriebes gabelförmig ausgebildet sind, so dass längs eines jeweiligen Koppelmittels zwei getrennte Kraftpfade zwischen den jeweiligen Anlenkungspunkten der Koppelmittel vorhanden sind.

Letztlich kann die Erfindung auch dadurch implementiert werden, dass das erste Koppelmittel des zweiten Koppelgetriebes als ternäres Getriebeglied ausgebildet ist, das über eine dreidimensionale, offen ausgebildete Struktur verfügt, die sich aus Gabeln oder Doppelstreben zusammensetzt, an denen endseitig jeweils Lageraugen angebracht sind.

Das jeweils mit dem Linearaktuator in Eingriff stehende Koppelgetriebe setzt die translatorische Bewegung der sich längs der Spindel(n) fortbewegenden Spindelmuttereinheit(en) in eine rotatorische Bewegung des ersten und/oder zweiten Armgliedes um die jeweils zweite bzw. dritte Schwenkachse um.

Durch die sechsgliedrige Ausbildung des zweiten Koppelgetriebes und/oder auch des ersten Koppelgetriebes, vorzugsweise in Form einer Watt'schen Kette zum Ausschwenken des ersten und/oder zweiten Armgliedes wird eine signifikante Vergrößerung des durch den Roboterarm zugänglichen Arbeitsraums ermöglicht. Dies betrifft insbesondere die Zugänglichkeit des Roboterarms in boden- und roboterbasisnahen Bereichen.

Zur drehbaren Lagerung der lösungsgemäßen Roboteranordnung um die erste Achse, die typischerweise der Vertikalachse entspricht, dient die motorisch um die erste Achse drehbar angeordnete Basis, vorzugsweise in Form einer Drehkranzanordnung mit Außenverzahnung, mit der zwei gegenseitig verspannte Antriebsritzel in Eingriff stehen. Mit einem derartig ausgebildeten Verspannungsgetriebe wird eine spielfreie Übertragung des Antriebsmomentes auf die Basis mit der darauf angeordneten Roboteranordnung möglich.

Im Folgenden wird die Erfindung anhand von Ausführungsbeispielen in Zeichnungsfiguren gezeigt und nachfolgend erläutert.

Dabei zeigen:
- Fig. 1: eine Seitenansicht des lösungsgemäß ausgebildeten vertikalen Knickarmroboters,
- Fig. 2a, b, c:: eine schematische Darstellung der Lagerung und Positionierung der als Drehkranzanordnung ausgebildeten Basis,
- Fig. 3a - 3e: eine perspektivische Ansicht auf die Koppelgetriebeanordnungen,
- Fig. 4:: eine Darstellung eines Teils des zweiten Armglieds,
- Fig. 5a, b:: eine perspektivische Darstellung sowie eine Schnittbilddarstellung durch eine Zentralhand sowie
- Fig. 6a, b:: eine Illustration des Aktionsradius der lösungsgemäß ausgebildeten Roboteranordnung.

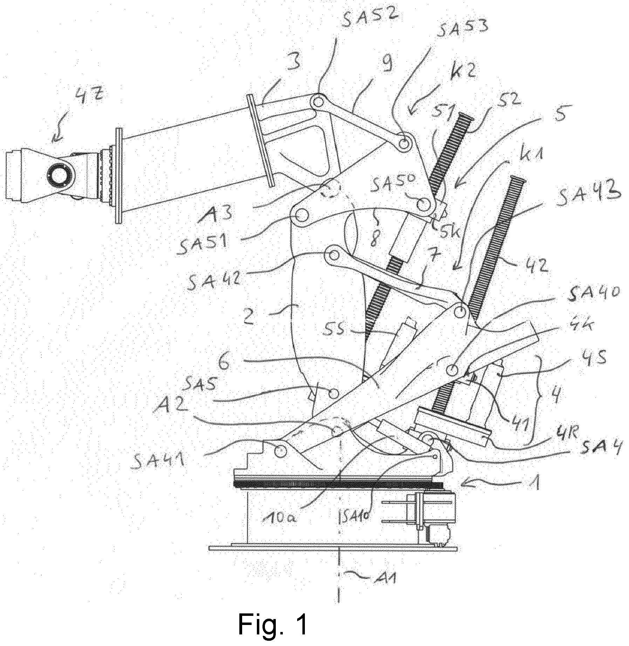

Fig. 1 zeigt eine Seitenansicht eines lösungsgemäß ausgebildeten vertikalen Knickarmroboters, der einen um eine erste Achse A1, die der Vertikalachse entspricht, drehbar angeordneten Roboterarm aufweist, der zwei in Form einer kinematischen Kette seriell hintereinander angeordnete Roboterarmglieder 2, 3 sowie eine zur Handhabung und Positionierung einer nicht weiter dargestellten Nutzlast endseitig am zweiten Armglied 3 angebrachte Zentralhand 4Z umfasst.

Das erste der beiden Armglieder 2 ist schwenkbar um eine zur ersten Achse A1 orthogonal orientierte zweite Achse A2 an der Basis 1 angebracht. Vorzugsweise ist die zweite Achse A2 horizontal orientiert. Endseitig am ersten Armglied 2, der Basis 1 gegenüberliegend, ist das zweite Armglied 3 schwenkbar um eine dritte Achse A3, die parallel zur zweiten Achse A2 orientiert ist, angebracht.

Für ein dynamisches Verschwenken des ersten Armgliedes 2 um die horizontale zweite Achse A2 dient ein Linearaktuator 4, der über ein erstes Koppelgetriebe K1 einerseits mit der Basis 1 und andererseits mit dem ersten Armglied 2 gekoppelt ist. Der erste Linearaktuator 4 ist als Spindelantrieb ausgebildet und verfügt über eine elektromotorisch angetriebene Spindel 42 in Form einer Gewindestange, die in Eingriff mit einer Spindelmuttereinheit 41 steht. Das untere Ende der Spindel ist an der um die erste Achse A1 rotierbar gelagerten Basis 1 um eine zur zweiten Achse A2 parallel orientierte Schwenkachse SA4 schwenkbar gelagert.

Der Spindelantrieb 4 verfügt über einen mittels eines Servomotors 4S angetriebenen Riemenantrieb 4R, der in Verbindung mit der Spindel 42 steht, wodurch sich die Spindelmuttereinheit 41 in axialer Richtung der Gewindespindel 42 in Abhängigkeit der Servomotordrehrichtung längs der Spindel 42 linear nach oben bzw. nach unten bewegt.

Die von der Spindelmuttereinheit 41 längs der Spindel 42 ausgeübte Linearbewegung wird mit Hilfe des Koppel- bzw. Hebelgetriebes K1 in eine rotatorische Bewegung des ersten Armgliedes 2 um die zweite Achse 2 umgesetzt. Hierzu weist das erste Koppel- bzw. Hebelgetriebe K1 ein erstes und zweites Zug- und Druckkräfte übertragendes Koppelmittel 6, 7 auf, von denen das erste Koppelmittel 6 einerseits mittel- oder unmittelbar an der Basis 1, um eine zur zweiten Achse A2 parallel orientierte Schwenkachse SA41 schwenkbar gelagert ist und andererseits mit der Spindelmuttereinheit 41 des ersten Linearaktuators 4 ebenfalls schwenkbar um eine Schwenkachse SA40 verbunden ist. Die Schwenkachse SA41 weist einen lateralen Abstand zur Schwenkachse SA4 auf, um die die Spindel 42 schwenkbar an der Basis 1 gelagert ist, um auf diese Weise einerseits am Ort der Spindelmuttereinheit 42 ein möglichst großes, die Spindel 42 auslenkendes Drehmoment bei möglichst minimaler Zugbelastung längs der Spindel zu erzeugen.

Das erste Koppelmittel 6 ist als ternäres Glied ausgebildet und weist außer den Schwenkachsen SA40 und SA41 noch eine dritte, von SA40 und von SA41 beabstandete Schwenkachse SA43 auf, an der es schwenkbar mit dem zweiten Koppelmittel 7 verbunden ist. Die Schwenkachsen SA40, SA41 und SA43 des ersten Koppelmittels sind voneinander beabstandet und zueinander parallel orientiert. Das zweite Koppelmittel 7 des ersten Koppelgetriebes K1 ist einerseits mit dem ersten Koppelmittel 6 um die Schwenkachse SA43 schwenkbar verbunden und andererseits an dem ersten Armglied 2 um eine zur zweiten Achse A2 parallel orientierte Schwenkachse SA42 schwenkbar gelagert. Zur schwenkbaren Lagerung des zweiten Koppelmittels 7 am ersten Armglied 2 ist es ebenfalls aus Gründen einer möglichst großen Drehmomenterzeugung bzw. -übertragung vorteilhaft, die Anbringung der Schwenkachse SA42 möglichst weit von der zweiten Achse A2 längs des ersten Armgliedes 2 zu platzieren, d. h. möglichst an dem der zweiten Achse A2 gegenüberliegenden Ende des ersten Armgliedes 2.

Das erste Koppelmittel 6 ist mit der Spindelmuttereinheit 41 über ein Kardangelenk 4K verbunden, so dass eine möglichst verlustarme, verkantungsfreie Umsetzung der von der Spindelmuttereinheit 41 ausgeübten Linearbewegung in eine das erste Armglied 2 um die zweite Achse A2 schwenkende Bewegung ermöglicht wird. Durch die optimiert beabstandete Anordnung der kinematischen Anlenkpunkte des ersten Koppelgetriebes K1 an den Orten der Schwenkachsen SA41, SA42 und SA43 sowie des Kardangelenkes 4K an der Spindelmuttereinheit 41 kann die auf die Spindel 42 wirkende Zugkraft minimiert werden. In vorteilhafter Weise ist zudem an der Basis 1 der Gewichtsausgleich in Form von zwei symmetrisch angeordneten Hydraulikzylindereinheiten 10a, 10b sowie einen die Hydraulikzylindereinheiten speisender Druckspeicher angebracht; je nach Ausführung können auch mehrere Druckspeicher vorgesehen werden. Die Hydraulikzylindereinheiten 10a, 10b stützen sich einseitig an der Basis 1 ab, an der sie zudem um eine gemeinsame Schwenkachse SA10 drehbar gelagert sind. Andererseits ist jede der Hydraulikzylindereinheiten drehbar um die Schwenkachse SA12 mit je einem Gabelteil eines mit dem ersten Armglied 2 fest verbundenen gabelförmigen Fortsatzes 12 verbunden Die Schwenkachsen SA10 und SA12 sind parallel zueinander und zur zweiten Achse A2 orientiert. Die Hydraulikzylindereinheiten 10a, 10b dienen somit als Gewichtsausgleichsystem und greifen symmetrisch an den beiden Gabelteilen des Fortsatzes 12 an, so dass Querkräfte durch das Gewichtsausgleichsystem auf das erste Armglied 2 vermieden werden.

Der Antrieb zur Initiierung dynamischer Schwenkbewegungen des zweiten Armgliedes 3 um die dritte Achse A3 erfolgt mit einem zum ersten Linearaktuator 4 ähnlichen zweiten Linearaktuator 5 in Form eines Spindelantriebs und einem mit diesem gekoppelten zweiten Koppelgetriebe K2, das als sechsgliedriges Koppelgetriebe, vorzugsweise in Form einer Watt'schen oder Stephenson'schen Kette, ausgebildet ist. Der zweite Linearaktuator 5 weist eine motorisch angetriebene als Gewindespindel ausgebildete Spindel 52 auf, die in Eingriff mit einer Spindelmuttereinheit 51 steht. Auch bei diesem Antrieb ist ein mit der Spindel 52 gekoppelter Riemenantrieb baugleich oder ähnlich dem Riemenantrieb 4R vorgesehen, der von einem Servomotor angetrieben wird, am Fuß der Spindel angeordnet ist und die Spindel antreibt. Es kann anstelle eines Servomotors beispielsweise auch ein hydraulischer oder pneumatischer Antrieb vorgesehen sein. Ein großer Vorteil der lösungsgemäßen Roboteranordnung ist darin zu sehen, dass identische oder weitgehend ähnliche Linearaktuatoren für den ersten und zweiten Linearaktuator verwendet werden können. Dies reduziert die Herstellungskosten in der Serienfertigung deutlich.

Die von der Spindelmuttereinheit 51 in Abhängigkeit der Motordrehrichtung des Servomotors längs der Spindel 52 durchgeführte Linearbewegung wird mit Hilfe des zweiten Koppelgetriebes K2 in eine um die dritte Achse A3 orientierte Rotations- bzw. Schwenkbewegung des zweiten Armglieds 3 umgesetzt, mit der das zweite Armglied 3 relativ zum ersten Armglied 2 geschwenkt werden kann.

Hierzu ist die Spindel 52, die ein Teil des zweiten Koppelgetriebes K2 ist, mit ihrem unteren Spindelende schwenkbar um die Schwenkachse SA5 am ersten Armglied 2 gelagert. Die Spindel 52 stützt sich somit in einem an dem ersten Armglied 2 angeordneten Schwenklager ab. Dies bewirkt zum einen, dass Schwenkbewegungen um die Achse A2 sowie Achse A3 voneinander entkoppelt sind und zum anderen können auf diese Weise die längs der Spindel 52 wirkenden Zugkräfte vom ersten Armglied 2 aufgenommen werden.

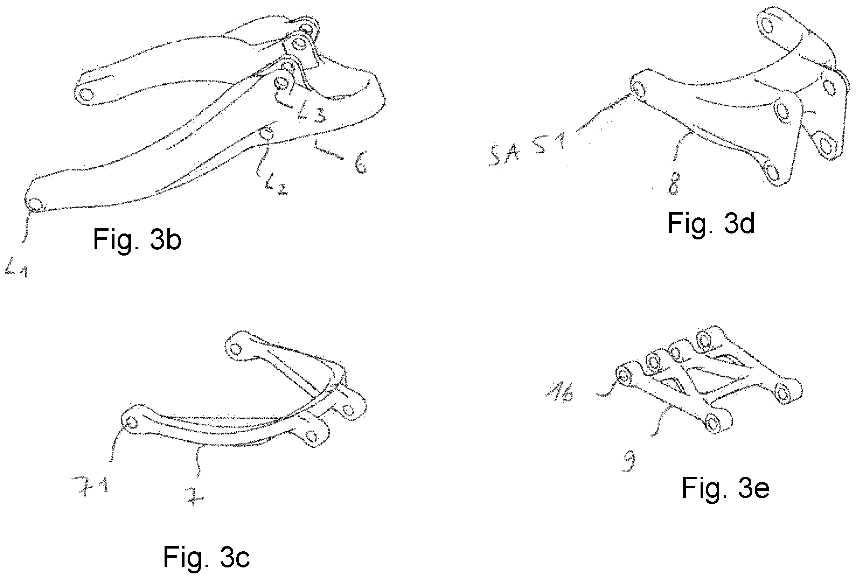

Das zweite Koppelgetriebe K2 umfasst ein erstes Koppelmittel 8, das in Art einer starren dreiecksförmigen Struktur ausgebildet ist. Diese Struktur weist drei, über Verbindungsstreben oder im vorliegenden Fall über ein einziges, gabelförmiges Teil, starr miteinander verbundene Anlenkungspunkte, vorzugsweise jeweils als Lageraugen ausgebildet, auf. In Fig. 1 ist das erste Koppelmittel 8 in Seitenansicht gezeigt, dessen räumliche Ausbildung jedoch in Fig. 3b dargestellt ist und im weiteren Beschreibungstext näher erläutert wird. Das erste Koppelmittel 8 ist einerseits an dem ersten Armglied 2 um eine zur zweiten Achse A2 parallel orientierte Schwenkachse SA51 schwenkbar gelagert und andererseits mit der Spindelmuttereinheit 51 des zweiten Linearaktuators 5 über ein Kardangelenk 5K zumindest um die Schwenkachse SA50 schwenkbar verbunden. Am Koppelmittel 8 ist eine zusätzliche Schwenkachse SA53 vorgesehen, um die das Koppelmittel 9 auf der einen Seite schwenkbar gelagert ist, welches andererseits um die Achse SA52 schwenkbar mit dem zweiten Armglied 3 verbunden ist. Die Sechsgliedrigkeit des zweiten Koppelgetriebes K2 setzt sich aus der Anzahl der durch Gelenke bzw. Schwenkachsen miteinander verbundenen Einzelglieder zusammen. Das zweite Koppelgetriebe K2 bildet eine sechsgliedrige Watt'sche Kette. Die Spindel 52 stellt die erste Einzelkomponente der Watt'schen Kette dar, längs der die Spindelmuttereinheit 51 als zweite Komponente bidirektional längsbeweglich angeordnet ist. Das zweite Koppelmittel 8 ist als dritte Einzelkomponente und starre Dreiecksstrukturmit der als Spindelmuttereinheit 51 ausgebildeten zweiten Einzelkomponente schwenkbar um die Schwenkachse SA50 verbunden sowie schwenkbar um die Schwenkachse SA51 mit dem ersten Armglied 2 und um die Schwenkachse SA53 mit dem zweiten Koppelmittel 9 verbunden, welches die vierte Einzelkomponente darstellt. Das zweite Koppelmittel 9 ist schwenkbar mit dem zweiten Armglied 3 als fünfte Einzelkomponente um die Achse SA52 verbunden. Das zweite Armglied 3 ist letztlich über die dritte Achse A3 schwenkbar an dem ersten Armglied 2 verbunden, das der sechsten Einzelkomponente der sechsgliedrigen Watt'schen Kette entspricht.

Sämtliche Anlenkungspunkte sowie Längen und Anstellwinkel des zweiten Koppelgetriebes K2 sind derart aufeinander abgestimmt, dass die längs der Spindel 52 wirkende Spindelkraft minimiert ist und keinerlei Kollisionen zwischen dem motorisch angetriebenen ersten und zweiten Koppelgetriebe auftreten können. Hierzu sind die Koppelmittel der beiden Koppelmittelgetriebe K1, K2, wie dies auch im Weiteren erläutert wird, gabel- bzw. koppelartig ausgebildet, wodurch die Kraftübertragung sowie auch die Steifigkeit der Konstruktion der jeweiligen Koppelgetriebe signifikant erhöht werden kann.

Die Kardangelenke 4K, 5K, des ersten und zweiten Linearaktuators sorgen für eine verlustarme, verkantungsfreie Kraft- und Drehmomenten-übertragung, und verhindern, dass andere Belastungen als Zug- oder Druckkräfte auf die Spindeln übertragen werden. Die Kardangelenke weisen hierzu jeweils zwei orthogonal zueinander orientierte Schwenkachsen auf, von denen jeweils eine, SA40, SA50 parallel zur zweiten Achse A2 orientiert ist. Beide Schwenkachsen des Kardangelenks sind jeweils orthogonal zur Spindelachse des jeweiligen Linearaktuators orientiert.

Alternativ zu der vorstehend erläuterten, bevorzugten Ausbildung des zweiten Koppelgetriebs K2 als sechsgliedrige Watt'sche Kette ist auch eine äquivalente Realisierung von K2 in Form einer so genannten sechsgliedrigen Stephenson'schen Kette denkbar. Mit Ausnahme der Ausbildung und der kinematischen Anbringung des vorstehend erläuterten ersten Koppelmittels 8 verbleibt in diesem Fall die Roboteranordnung ansonsten unverändert.

Im Fall einer sechsgliedrigen Stephenson'schen Kette ist das Koppelmittel/die Dreiecksstruktur 8 direkt mit dem zweiten Armglied 3 schwenkbar um die Schwenkachse SA52 verbunden und stützt sich gelenkig mittels eines weiteren Koppelmittels am ersten Armglied 2 ab.

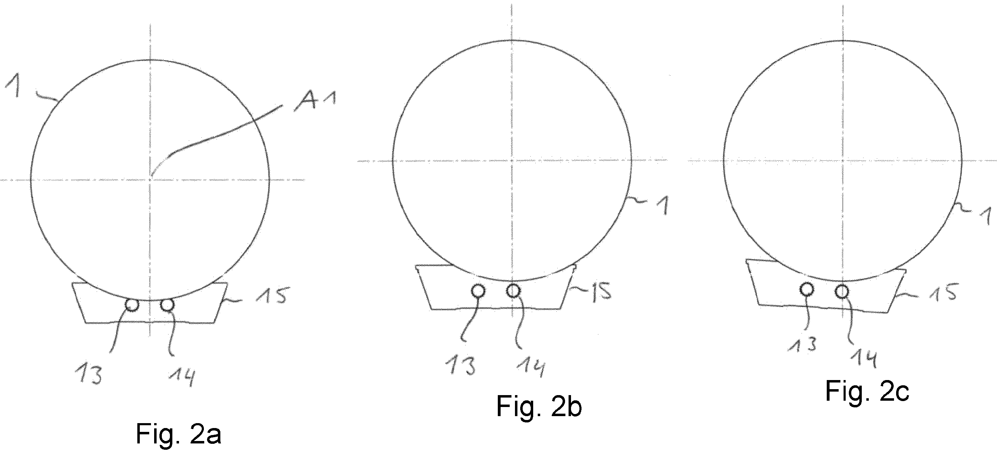

In den Fig. 2a-c sind jeweils Draufsichten auf die als Drehkranz mit Außengewinde ausgebildete um die erste Achse A1 rotierbar gelagerte Basis 1 dargestellt. Um für eine stabile Lagerung der Basis 1 sowie eine spielfreie Übertragung eines Antriebsmomentes auf die als Drehkranz ausgebildete Basis 1 zu gewährleisten, sind zwei mechanisch gegeneinander verspannte Antriebsritzel 13, 14 vorgesehen, die innerhalb eines gemeinsamen Getriebegehäuses in Form eines Verspannungsgetriebes 15 untergebracht sind. Im Weiteren gilt es beide Antriebsritzel 13, 14 exakt und unabhängig voneinander derart an die Außenperipherie der als Drehkranz ausgebildeten Basis 1 zu fügen, so dass die Antriebsritzel exakt auf den Zähnen des Drehkranzes abrollen. Die Spielfreiheit der ineinandergreifenden Verzahnung ergibt sich aus der Verspannung der beiden Antriebsritzel gegeneinander. Diese Anordnung ist vor allem dynamischen Effekten geschuldet. Es soll verhindert werden, dass bei einem Reversieren, d. h. dem Ändern der Drehrichtung, das Zahnflankenspiel zu Ungenauigkeiten bei der Bewegung der Last führt.

Aufgrund der Anordnung mit den zwei gegeneinander verspannten Antriebsritzeln 13, 14 ist eine spezielle Positioniereinrichtung für das verspannte Getriebe 15 erforderlich, das sowohl eine translatorische sowie auch rotatorische Positionierung ermöglicht.

In einem ersten Schritt wird durch Translation des Getriebegehäuses zunächst ein Antriebsritzel 14 exakt mit der Zahnflankenstruktur des Drehkranzes in Eingriff gebracht, wie dies in Fig. 2b illustriert ist, wobei das zweite Antriebsritzel 13 von der Drehkranzstruktur beabstandet bleibt. Im nächsten Schritt gemäß Fig. 2c wird das Verspannungsgetriebe 15 samt des Antriebsritzels 13 um die Drehachse des Antriebsritzels 14 an die Zahnflankenkontur des Drehkranzes 1 gedreht. Durch diese Anordnung, bei der die Drehachse, um die herum das Getriebegehäuse bzw. das Verspannungsgetriebe 15 gedreht wird, und die Drehachse des Antriebsritzels 14 identisch sind, ist es möglich, die Teilkreise beider Antriebsritzel 13, 14 unabhängig voneinander auf den Teilkreis des Drehkranzes 1 einzustellen und einen perfekten Lauf der Zahnradpaarungen zu gewährleisten.

Die für den vorstehenden Positioniervorgang erforderliche Positioniereinrichtung umfasst speziell angepasste äußere und innere Lagerschalen mit jeweils unterschiedlichen Radien, die gemeinsam auf Führungsschienen translatorisch verschiebbar angebracht sind. Nach geeigneter translatorischer Positionierung werden die äußeren Lagerschalen fixiert und die inneren Lagerschalen in geeigneter Weise gedreht. Greifen beide Antriebsritzel exakt in den Drehkranz ein, so werden beide Lagerschalen starr miteinander verbunden.

Auf diese Weise ist sichergestellt, dass beide Antriebsritzel 13, 14 exakt mit den Zähnen des Drehkranzes im Eingriff stehen. Hierdurch ist es möglich, dass Antriebsmomente über 60 kNm übertragen werden können, mit denen sowohl das Eigengewicht der Roboteranordnung bewegt, aber insbesondere Nutzlasten bis zu 4 t mit Hilfe der Roboteranordnung gehandhabt und positioniert werden können.

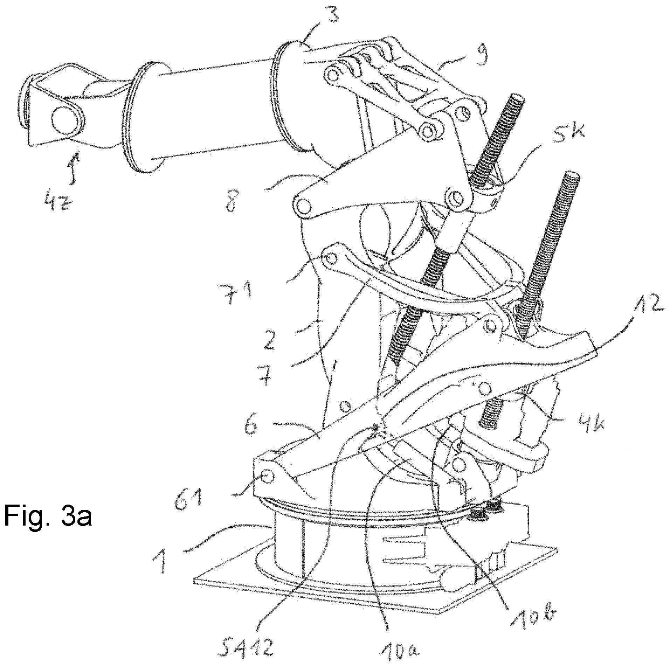

Fig. 3a zeigt eine perspektivische Ansicht des Roboterarmes, der die räumliche Ausgestaltung des ersten und zweiten Koppelgetriebes K1, K2 entnommen werden kann. Bei der Handhabung von Nutzlasten, insbesondere mit Hilfe einer um drei Raumachsen beliebig verdrehbaren Zentralhand 4Z treten neben den Hubkräften längs der ersten und zweiten Armglieder 2, 3 orientierte Torsionsbelastungen auf, die zumindest teilweise von den zwei Koppelgetrieben K1 und K2 aufzunehmen sind. Um für eine ausreichende Traglaststabilität sowie insbesondere auch Torsionssteifigkeit innerhalb der zwei Koppelgetriebe K1, K2 zu sorgen, sind die die jeweiligen Koppelgetriebe zusammensetzenden Koppelmittel spangen- bzw. gabelförmig ausgebildet. An den Gabelteilen des gabelförmigen Fortsatzes 12, der fest und steif mit dem ersten Armglied 2 verbunden ist, greifen die beiden Hydraulikzylinder 10a, 10b zum Gewichtsausgleich an._Zudem sind das erste und zweite Koppelmittel 6, 7 jeweils spangen- bzw. gabelförmig ausgebildet und verfügen pro Schwenkachse jeweils über wenigstens zwei Verbindungspunkte bzw. Lageraugen 61, 71, über die längs der einzelnen Koppelmittel Torsionsmomente abgefangen werden können. Die einzelnen spangen- bzw. gabelförmig ausgebildeten Koppelmittel 6, 7 sind konstruktiv derart ausgestaltet, dass sie sich noch gut fertigen lassen.

Neben der hohen Torsionssteifigkeit erlauben die spangen- bzw. gabelförmig ausgebildeten Koppelmittel 6, 7 einen möglichst kompakten und den Bauraum reduzierenden Zusammenbau beider, die einzelnen Armglieder 2, 3 antreibenden Linearaktuatoren 4, 5, und gewährleisten überdies, dass die Linearaktuatoren und die damit verbundenen Koppelgetriebe während des Robotereinsatzes nicht in gegenseitige Kollision geraten.

Ferner kann aus Fig. 3a die Ausbildung und Anbringung des zweiten Koppelgetriebes K2 entnommen werden, so insbesondere das als starre Dreiecksstruktur ausgebildete Koppelmittel 8, das in Einzeldarstellung in Fig. 3d illustriert ist, in der zusätzlich die Schwenkachse SA51 enthalten ist.

Das als ternäre Getriebeglied ausgebildete Koppelmittel 8 verfügt über eine dreidimensionale, offen ausgebildete Struktur und kann als gegossenes Teil mit den Lageraugen L1, L2, L3 gefertigt sein. Das Koppelmittel 8 umfasst dabei einen inneren Bauraum, in den durch die offene Ausbildung der Gabel- bzw. Strebenkonstruktion bspw. der Servomotor 5S des zweiten Linearaktuators 5 bei maximaler Strecklage der Roboteranordnung kollisionsfrei eindringen kann. Ferner greift das Koppelmittel 8 in Verbindung mit dem doppelgabelförmig ausgebildeten zweiten Koppelmittel 9, das in Fig. 3e illustriert ist, an vier Lagerstellen 16 an dem zweiten Armglied 3 an.

Diese spezielle konstruktive Auslegung des zweiten Koppelgetriebes K2 sorgt für eine hohe Steifigkeit und gestattet ein Einleiten bzw. Abfangen von Torsionsmomenten, die weiter durch die Torsionssteifigkeit des unteren ersten Koppelgetriebes K1 abgefangen werden können.

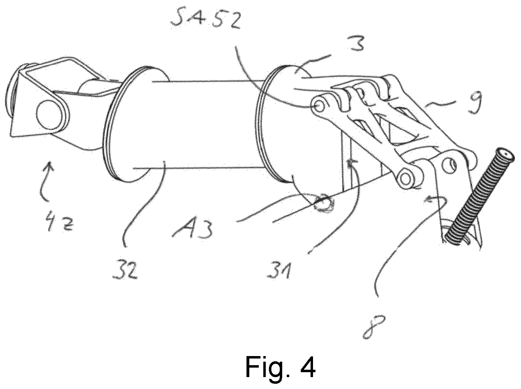

In Fig. 4 sind Einzelteile des zweiten Armgliedes 3 in perspektivischer Ansicht illustriert. Die Doppelarmschwinge 31 sieht Lageraugen zur schwenkbeweglichen Anordnung des zweiten Armgliedes 3 relativ zum ersten Armglied 2 um die Achse A3 vor sowie Lageraugen zur schwenkbaren Ankopplung des zweiten Koppelmittels 9 des zweiten Koppelgetriebes K2 um die Achse SA52. Um die Modularität des Robotersystems zu gewährleisten, kann je nach Einsatz- und Anwendungszweck ein unterschiedlich lang dimensioniertes Armrohr 32 abnehmbar fest an das Bauteil 31 montiert werden. Die Zentralhand 4Z kann dann jeweils am freien Ende des Armrohrs 32 montiert werden.

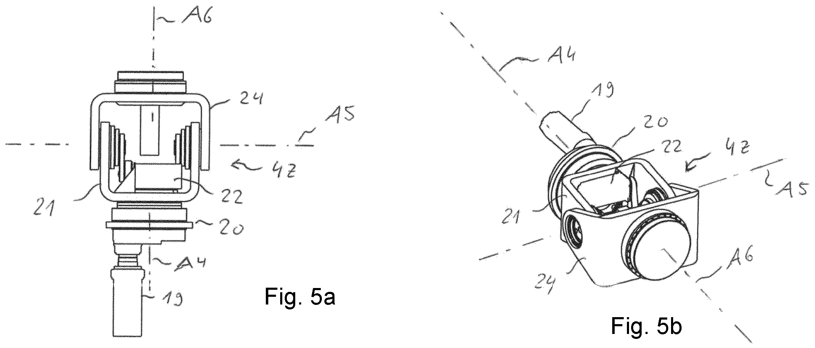

Die in den Figuren 5a und 5b dargestellte Zentralhand 4Z stellt ein eigenständiges Modul dar, das bspw. durch eine einfachere, für viele Anwendungen ausreichende Lösung, wie bspw. eine Palletierhand ersetzt werden kann. Bei der Ausbildung der Zentralhand 4Z gemäß dem gezeigten Ausführungsbeispiel handelt es sich um eine übliche Zentralhand, die sich durch folgende Eigenschaften auszeichnet:
Ein Antriebsmotor 19 ist über ein Getriebe 20 mit einem U-förmigen Übertragungselement 21 zu dessen Drehantrieb um die vierte Achse A4 verbunden Das Getriebe 20 besitzt eine Hohlwelle, so dass durch diese Energiezuführungen sowie Datenkabel für weitere Antriebe, Sensorik und Werkzeuge hindurchgeführt werden können. Innerhalb des U-förmigen Übertragungselementes 21 ist ein weiterer Motor 22 angeordnet, der seinerseits über ein weiteres Getriebe eine Bewegung um die fünfte Achse A5 initiiert. Das weitere Getriebe besteht aus zwei sich gegenüberliegenden Getriebeeinheiten, die jeweils mit Hilfe eines Riementriebs durch den gemeinsamen Servomotor 22 angetrieben werden. Durch diese Anordnung ist es möglich, die Handachse besonders kompakt auszuführen.

Die sich gegenüberliegenden Getriebeeinheiten der fünften Achse A5 treiben ein weiteres U-förmiges Übertragungselement 24 an, an dem das Getriebe und der Motor der sechsten Achse A6 befestigt sind. Die Motoren zum Antrieb der Bewegungen um die fünfte und sechste Achse A5, A6 befinden sich jeweils innerhalb der Gabelräume der beiden gabel- oder U-förmigen Übertragungselemente 21, 24 und tragen dazu bei, dass die Abmessungen der Zentralhand 4z sehr klein sind.

Die lösungsgemäße Roboteranordnung stellt eine robuste und modular variierbare Konstruktion dar, die eine individuelle Anpassung an unterschiedliche Nutzlastaufgaben erlaubt.

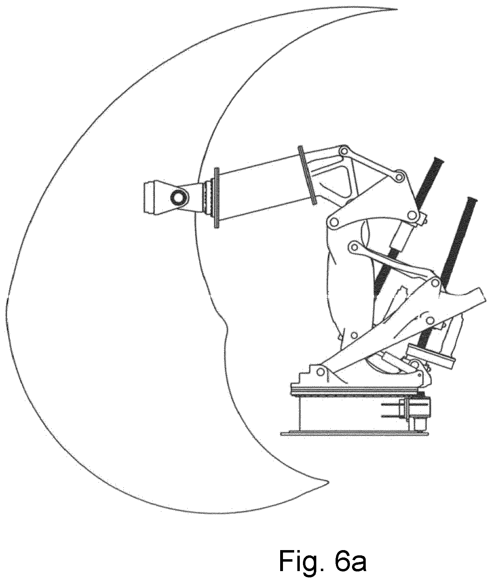

Fig. 6a illustriert die maximale vertikale Ausdehnung des Arbeitsbereiches A, die bis zu 7 m in vertikaler Erstreckung reichen kann. Die beispielhafte Darstellung des modularen Robotersystems ermöglicht Ausprägungen des Armglieds 2,3 von 2,5 m bzw. 3 m.

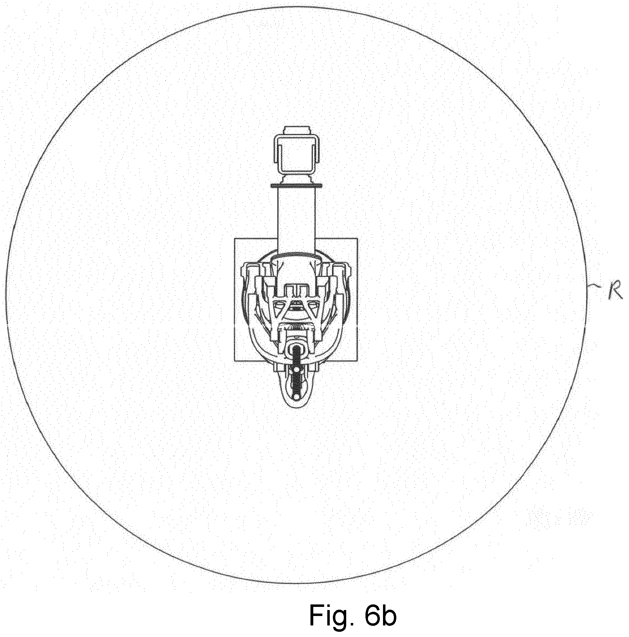

In Fig. 6b ist eine Draufsicht auf einen lösungsgemäß ausgebildeten vertikalen Knickarmroboter gezeigt, dessen maximale Reichweite R zur Betätigung von Nutzlasten bis zu vier Tonnen 6 m betragen kann. Durch die Eigengröße der Roboteranordnung ist in der beispielhaften Ausführung ein Bereich um die erste Achse A1 mit einem Radius von ca. 1,5 m ausgenommen.

Um einem Robotersystem eine ausreichend hohe Steifigkeit, Bewegungsgenauigkeit und Reproduzierbarkeit der Bewegungen zu verleihen, die notwendig ist, um eine hohe Positioniergenauigkeit zu erreichen, müsste in einer herkömmlichen Bauweise der Roboter sehr massiv und schwer gebaut werden. Zudem sind bei der Bewegung großer Nutzlasten sehr hohe Antriebsmomente um die einzelnen Roboterachsen erforderlich, die jedoch von innerhalb der einzelnen Achsen verbauten Motoren mit entsprechenden Getrieben, wie sie derzeit auf dem Markt erhältlich sind, nicht realisiert werden können.

## Patentansprüche

1. Vorrichtung in Form eines Knickarmroboters zur Handhabung einer Nutzlast, mit einem Roboterarm, der
- an einer um eine erste Achse (A1) drehbaren Basis (1) befestigt ist,
- der zumindest zwei, in Form einer kinematischen Kette hintereinander angeordnete Armglieder (2, 3) aufweist, von denen ein erstes Armglied (2) um eine quer zur ersten Achse verlaufende, insbesondere zur ersten Achse orthogonal orientierte, zweite Achse (A2) an der Basis (1) schwenkbar gelagert ist und ein zweites Armglied (3) um eine ebenfalls quer zur ersten Achse verlaufende, insbesondere parallel zur zweiten Achse (A2) orientierte, dritte Achse (A3) an dem ersten Armglied (2) schwenkbar gelagert ist, und der
insbesondere eine an der kinematischen Kette endseitig angebrachte Vorrichtung zu Handhabung von Werkzeugen oder Nutzlasten, weiter insbesondere eine Zentralhand (4z), aufweist, wobei ein das erste Armglied (2) um die zweite Achse (A2) schwenkender, erster Linearaktuator (4) vorgesehen ist, der über ein erstes Koppelgetriebe (K1) einerseits mit der Basis (1) und andererseits mit dem ersten Armglied (2) gekoppelt ist,
**dadurch gekennzeichnet, dass** ein das zweite Armglied (3) um die dritte Achse (A3) schwenkender, zweiter Linearaktuator (5) vorgesehen ist, der über ein zweites, insbesondere sechsgliedriges, Koppelgetriebe (K2) ausschließlich mit dem ersten Armglied (2) und dem zweiten Armglied (3) gekoppelt ist, wobei der Fuß des zweiten Linearaktuators an dem ersten Armglied abgestützt ist.

2. Vorrichtung nach Anspruch 1, **dadurch gekennzeichnet, dass** der erste und/oder der zweite Linearaktuator (4, 5) jeweils als Spindelantrieb ausgebildet ist, der jeweils eine motorisch angetriebene Spindel (42, 52) vorsieht, die in Eingriff mit einer Spindelmutter (41, 51) steht.

3. Vorrichtung nach Anspruch 2, **dadurch gekennzeichnet, dass** wenigstens eine der Spindeln (42, 52) um eine zur zweiten Achse (A2) parallel orientierte Schwenkachse (SA4, SA5) schwenkbar gelagert ist.

4. Vorrichtung nach Anspruch 2 oder 3, **dadurch gekennzeichnet, dass** wenigstens eine der Spindeln (42, 52) an ihrem Fußpunkt kardanisch gelagert ist.

5. Vorrichtung nach einem der Ansprüche 2 bis 4, **dadurch gekennzeichnet, dass** die Spindel (42) des ersten Linearaktuators (4) kardanisch schwenkbar an der Basis (1) gelagert ist und/oder dass die Spindel (52) des zweiten Linearaktuators kardanisch schwenkbar am ersten Armglied (2) gelagert ist, wobei jeweils die Motorantriebe der Spindeln mit den kardanischen Lagern in einer Baueinheit verbunden sind.

6. Vorrichtung nach Anspruch 2, 3, 4 oder 5, **dadurch gekennzeichnet, dass** das erste Koppelgetriebe (K1) über ein Kardangelenk (4K) mit der Spindelmuttereinheit (41) des ersten Linearaktuators (4) und/oder das zweite Koppelgetriebe (K2) über ein Kardangelenk (5K) mit der Spindelmuttereinheit (51) des zweiten Linearaktuators (5) schwenkbar gekoppelt ist.

7. Vorrichtung nach Anspruch 6, **dadurch gekennzeichnet, dass** die kardanische Lagerung einer oder beider Spindeln jeweils einen schüsselförmigen Außenkardan, eine innerhalb des Außenkardan drehbar gelagerten Innenkardan sowie innerhalb des Innenkardan ein Lager für eine Spindel aufweist, wobei insbesondere ein Deckel des Kardanlagers eine Motoreinheit des Spindelantriebs trägt.

8. Vorrichtung nach einem der Ansprüche 2 bis 7, **dadurch gekennzeichnet, dass** das erste Koppelgetriebe (K1) und/oder das zweite Koppelgetriebe (K2) als sechsgliedrige Watt'sche oder Stephenson'sche Kette ausgebildet ist.

9. Vorrichtung nach Anspruch 8, **dadurch gekennzeichnet, dass** das erste Koppelgetriebe ein ternäres Glied (6) in der Form eines starren Dreiecks sowie ein zweites Koppelmittel (7) aufweist, wobei das ternäre Glied an jeder seiner Ecken jeweils um eine Schwenkachse schwenkbar derart gelagert ist, dass es um eine erste Schwenkachse (SA40) mit der Spindelmuttereinheit (41), um eine zweite Schwenkachse (SA41) mit der Basis (1), und um eine dritte Schwenkachse (SA43) mit dem zweiten Koppelmittel (7) schwenkbar verbunden ist.

10. Vorrichtung nach einem der Ansprüche 1 bis 9, **dadurch gekennzeichnet, dass** zwei Gabelteile (12a, 12b) eines gabelförmigen Fortsatzes (12) des ersten Armgliedes (2) schwenkbar um eine gemeinsame Schwenkachse (SA12) mit zwei sich jeweils einseitig schwenkbar um eine Schwenkachse (SA10) an der Basis (1) abstützenden Hydraulikzylindereinheiten (10a, 10b) verbunden sind, wobei die Schwenkachsen (SA10) und (SA12) parallel zur zweiten Achse (A2) orientiert sind.

## Claims

1. A device in the form of an articulated arm robot for handling a pay-load, with a robot arm that
- is attached to a base (1) that can rotate around a first axis (A1),
- which has at least two arm members (2, 3) arranged one behind the other in the form of a kinematic chain, of which a first arm member (2) is pivotably mounted on the base (1) around a second axis (A2) which extends transversely to the first axis, particularly orthogonally oriented to the first axis, and a second arm member (3) which is pivotably mounted on the first arm member (2) around a third axis (A3) which also extends transversely to the first axis and is oriented particularly parallel to the second axis (A2) and
particularly a device attached to the end of the kinematic chain for handling tools or payloads, further in particular having a central hand (4z), a first linear actuator (4) being provided which pivots the first arm member (2) around the second axis (A2) and is coupled via a first coupling gear (K1) on the one hand to the base (1) and on the other hand to the first arm member (2),
**characterised in that** a second linear actuator (5) is provided which pivots the second arm member (3) around the third axis (A3) and which is coupled exclusively to the first arm member (2) and the second arm member (3) via a second in particular six-membered coupling gear (K2), the foot of the second linear actuator being supported on the first arm member.

2. A device according to claim 1, **characterised in that** the first and/or second linear actuator (4, 5) is configured as a spindle drive, each providing a motor-driven spindle (42, 52) that engages with a spindle nut (41, 51).

3. A device according to claim 2, **characterised in that** at least one of the spindles (42, 52) is mounted such as to be pivotable around a pivot axis (SA4, SA5) oriented parallel to the second axis (A2).

4. A device according to claim 2 or 3, **characterised in that** at least one of the spindles (42, 52) is mounted on a gimbal at its base.

5. A device according to any one of claims 2 to 4, **characterised in that** the spindle (42) of the first linear actuator (4) is mounted on the base (1) such to be pivotable on a gimbal and/or that the spindle (52) of the second linear actuator is mounted on the first arm member (2) such to be pivotable on a gimbal, the motor drives of the spindles being connected to the gimbal bearings in a single unit.

6. A device according to claim 2, 3, 4 or 5, **characterised in that** the first coupling gear (KI) is connected via a gimbal joint (4K) to the spindle nut unit (41) of the first linear actuator (4) and/or the second coupling gear (K2) is pivotably coupled to the spindle nut unit (51) of the second linear actuator (5) via a gimbal joint (5K).

7. A device according to claim 6, **characterised in that** the gimbal bearing of one or both spindles each has a bowl-shaped outer cardan, an inner cardan rotatably mounted within the outer cardan, and a bearing for a spindle within the inner cardan, in particular a cover of the cardan bearing supporting a motor unit of the spindle drive.

8. A device according to any one of claims 2 to 7, **characterised in that** the first coupling gear (K1) and/or the second coupling gear (K2) is designed as a six-link Watt's or Stephenson's chain.

9. A device according to claim 8, **characterised in that** the first coupling gear comprises a ternary member (6) in the form of a rigid triangle and a second coupling agent (7), the ternary member being mounted at each of its corners such as to be pivotable around a pivot axis, that it is pivotably connected about a first pivot axis (SA40) with the spindle nut unit (41), about a second pivot axis (SA41) with the base (1), and about a third pivot axis (SA43) with the second coupling agent (7).

10. A device according to any one of claims 1 to 9, **characterised in that** two yoke parts (12a, 12b) of a yoke-shaped extension (12) of the first arm member (2) are pivotably connected around a common pivot axis (SA12) to two hydraulic cylinder units (10a, 10b) supported pivotably to one side each around a pivot axis (SA10) on the base (1), the pivot axes (SA10) and (SA12) being oriented parallel to the second axis (A2).

## Revendications

1. Dispositif sous forme de robot à bras articulé permettant le maniement d'une charge utile, avec un bras robotisé qui
- est fixé à une base (1) pouvant tourner autour d'un premier axe (A1),
- qui présente au moins deux éléments de bras (2, 3) agencés l'un derrière l'autre sous la forme d'une chaîne cinématique, parmi lesquels un premier élément de bras (2) est monté de manière à pouvoir pivoter au niveau de la base (1) autour d'un deuxième axe (A2) s'étendant de manière transversale par rapport au premier axe, en particulier en étant orienté de manière orthogonale par rapport au premier axe, et un deuxième élément de bras (3) est monté de manière à pouvoir pivoter au niveau du premier élément de bras (2) autour d'un troisième axe (A3) s'étendant également de manière transversale par rapport au premier axe, en particulier en étant orienté de manière parallèle au deuxième axe (A2), et qui
présente en particulier un dispositif installé à l'extrémité de la chaîne cinématique et permettant le maniement d'outils ou de charges utiles, de manière plus particulièrement préférée une main centrale (4z), dans lequel un premier actionneur linéaire (4) est prévu qui fait pivoter le premier élément de bras (2) autour du deuxième axe (A2) et qui est couplé d'une part à la base (1) et d'autre part au premier élément de bras (2) par l'intermédiaire d'un premier engrenage d'accouplement (K1),
**caractérisé en ce qu'**un deuxième actionneur linéaire (5) est prévu qui fait pivoter le deuxième élément de bras (3) autour du troisième axe (A3) et qui est couplé exclusivement au premier élément de bras (2) et au deuxième élément de bras (3) par l'intermédiaire d'un deuxième engrenage d'accouplement (K2), en particulier à six éléments, dans lequel le pied du deuxième actionneur linéaire est supporté au niveau du premier élément de bras.

2. Dispositif selon la revendication 1, **caractérisé en ce que** le premier et/ou le deuxième actionneur linéaire (4, 5) est réalisé respectivement sous la forme d'un entraînement à broche fournissant respectivement une broche motorisée (42, 52) qui est en prise avec un écrou de broche (41, 51).

3. Dispositif selon la revendication 2, **caractérisé en ce qu'**au moins une des broches (42, 52) est montée de manière à pouvoir pivoter autour d'un axe de pivotement (SA4, SA5) orienté parallèlement au deuxième axe (A2).

4. Dispositif selon la revendication 2 ou 3, **caractérisé en ce qu'**au moins une des broches (42, 52) est montée à la Cardan au niveau de son point de pied.

5. Dispositif selon l'une quelconque des revendications 2 à 4, **caractérisé en ce que** la broche (42) du premier actionneur linéaire (4) est montée de manière à pouvoir pivoter à la Cardan au niveau de la base (1) et/ou **en ce que** la broche (52) du deuxième actionneur linéaire est montée de manière à pouvoir pivoter à la Cardan au niveau du premier élément de bras (2), dans lequel les entraînements motorisés des broches sont reliés aux paliers à cardan au sein d'une unité structurelle.

6. Dispositif selon la revendication 2, 3, 4 ou 5, **caractérisé en ce que** le premier engrenage d'accouplement (KI) est couplé de manière pivotante à l'unité d'écrou de broche (41) du premier actionneur linéaire (4) par l'intermédiaire d'un cardan (4K) et/ou le deuxième engrenage d'accouplement (K2) est couplé de manière pivotante à l'unité d'écrou de broche (51) du deuxième actionneur linéaire (5) par l'intermédiaire d'un cardan (5K).

7. Dispositif selon la revendication 6, **caractérisé en ce que** le palier à cardan d'une ou des deux broches présente respectivement un cardan extérieur en forme de cuvette, un cardan intérieur monté rotatif à l'intérieur du cardan extérieur et, à l'intérieur du cardan intérieur, un palier destiné à une broche, dans lequel une protection du palier à cardan porte en particulier une unité motrice de l'entraînement de broche.

8. Dispositif selon l'une quelconque des revendications 2 à 7, **caractérisé en ce que** le premier engrenage d'accouplement (K1) et/ou le deuxième engrenage d'accouplement (K2) est/sont réalisé(s) sous la forme d'une chaîne de Watt ou de Stephenson à six éléments.

9. Dispositif selon la revendication 8, **caractérisé en ce que** le premier engrenage d'accouplement présente un élément ternaire (6) en forme de triangle rigide et un deuxième moyen d'accouplement (7), dans lequel l'élément ternaire est monté à chacun de ses coins de manière à pouvoir pivoter autour d'un axe de pivotement de telle manière que ledit élément ternaire est relié à l'unité d'écrou de broche (41) de manière à pouvoir pivoter autour d'un premier axe de pivotement (SA40), à la base (1) de manière à pouvoir pivoter autour d'un deuxième axe de pivotement (SA41) et au deuxième moyen d'accouplement (7) de manière à pouvoir pivoter autour d'un troisième axe de pivotement (SA43).

10. Dispositif selon l'une quelconque des revendications 1 à 9, **caractérisé en ce que** deux parties de fourche (12a, 12b) d'une extension en forme de fourche (12) du premier élément de bras (2) sont reliées, de manière à pouvoir pivoter autour d'un axe de pivotement (SA12) commun, à deux unités de vérin hydraulique (10a, 10b) respectivement supportées au niveau de la base (1) de manière à pouvoir pivoter d'un côté autour d'un axe de pivotement (SA10), dans lequel les axes de pivotement (SA10) et (SA12) sont orientés parallèlement au deuxième axe (A2).
